# EUROPÄISCHE PATENTSCHRIFT

(11) **EP 0 645 286 B1**
(45) Veröffentlichungstag und Bekanntmachung des Hinweises auf die Patenterteilung: **25.02.1998**
(21) Anmeldenummer: 94112230.1
(22) Anmeldetag: 04.08.1994
(51) Int. Cl.: B60R 25/00

(54) **Diebstahlschutz für Kraftfahrzeuge mit mehreren Steuergeräten für Fahrzeugkomponente**
Anti-theft protection system for automotive vehicles with components driven by control units
Système anti-vol pour véhicule automobile avec plusieurs dispositifs de commande pour des composantes de véhicule

(30) Priorität: 23.09.1993 DE 4332411
(43) Veröffentlichungstag der Anmeldung: 29.03.1995
(73) Patentinhaber: Bayerische Motoren Werke Aktiengesellschaft, 80788 München (DE)
(72) Erfinder: Pollag, Christoph, D-94419 Reisbach (DE)

(56) Entgegenhaltungen:
- WO-A-81/03002
- WO-A-93/05987
- DE-A- 3 716 811
- DE-A- 3 743 856
- DE-C- 4 331 664
- GB-A- 2 184 273
- GB-A- 2 251 503
- US-A- 4 852 680
- PATENT ABSTRACTS OF JAPAN vol. 012 no. 260 (M-720) ,21.Juli 1988 & JP-A-63 041268 (NEC CORP) 22.Februar 1988,

## Beschreibung

Die Erfindung bezieht sich auf ein Betriebsverfahren mit den Merkmalen des Oberbegriffs von Patentanspruch 1.

Ein derartiges Betriebsverfahren ist aus der WO 93/05987 A bekannt. Die miteinander verbundenen Steuergeräte geben bei nicht erfolgreichem Vergleich ein Error-Signal an die anderen Steuergeräte aus, um diese Steuergeräte zu sperren, obwohl sie eine erfolgreichen Vergleich durchgeführt haben. Beim Error-Signal handelt es sich nicht um einen individuelles Quittierungssignal. Damit aber ist es nicht möglich, das Vorliegen der Betriebsbereitschaft sämtlicher Steuergeräte durch die jeweils verbleibenden anderen Steuergeräte festzustellen.

Versagt bei den bekannten Verfahren eines der betroffenen Steuergeräte darin, das Error-Signal auszugeben, so arbeiten die verbleibenden Steuergeräte ordnungsgemäß. Ein derartiges Versagen kann beispielsweise durch Unterbrechen der Datenleitung hervorgerufen werden, die das Steuergerät mit dem Datenbus verbindet.

Bei dem Steuergerät kann es sich beispielsweise um den Anlasser handeln. Es ist dann, wie allgemein bekannt, ohne weiteres möglich, das Fahrzeug auch ohne einen Anlasser durch Anschleppen anzulassen. Das Fahrzeug kann dann ohne weiteres in Betrieb genommen werden. Damit aber ist das bekannte Verfahren nicht geeignet, einen wirksamen Diebstahlschutz zu erzeugen.

Der Erfindung liegt die Aufgabe zugrunde, ein Verfahren der eingangs genannten Art zu schaffen, bei dem eine mißbräuchliche Inbetriebnahme des Fahrzeugs ausgeschlossen ist.

Die Erfindung löst diese Aufgabe durch die Merkmale des Patentanspruchs 1.

Die Individualisierung des Quittierungssignals macht es möglich, das Vorliegen der Betriebsbereitschaft sämtliche Steuergeräte durch die jeweils verbleibenden anderen Steuergeräte festzustellen. In beiden Fällen einer Manipulation, nämlich dem Unterbrechen der Datenleitung eines Steuergeräts bzw. beim Versuch, die Funktion eines Anlassers anderweitig darzustellen, können sämtliche Steuergeräte nicht in Betrieb genommen werden. Ein Diebstahl des Fahrzeugs ist damit ausgeschlossen.

Durch den Vergleich der eingegebenen Prüfinformationen in den Steuergeräten selbst ergibt sich eine deutliche Erhöhung der Sicherheit, da dadurch Manipulationsmöglichkeiten wie sie bei einem zentralen Vergleich der eingegebenen Prüfinformationen mit den für jedes Steuergerät maßgeblichen Referenzinformationen möglich sind, vorgebeugt werden.

Schließlich ist die Ausbildung der Prüf- und Referenzinformation als Bildinformationen insoweit vorteilhaft, als sie sich durch eine relativ leichte Handhabbarkeit und damit verbunden einer hohen Informationsdichte auszeichnen.

Die Verwendung eines Fingerabdrucks eines Benutzers als Bildinformation ist zwar für sich aus der Zeitschrift VDI Nachrichten Nr. 3 vom 22.01.1993, Seite 13 in Verbindung mit einem Zugangskontrollsystem bekannt. Der Fingerabdruck besitzt dabei eine Schlüsselfunktion. Die Anwendung dieses Systems im Rahmen der vorliegenden Erfindung bedeutet dabei jedoch nicht eine einfache Übertragung auf Kraftfahrzeuge, sondern unterscheidet sich demgegenüber durch die Unterschiedlichkeit der aufgenommenen bzw. zum Vergleich bereitgehaltenen Prüf- bzw. Referenzinformation in jedem der Steuergeräte. Der Fingerabdruck hat somit nicht die Qualität eines einzigen Schlüssels, sondern liefert ein Bündel von Schlüsseln, von denen im Extremfall jeweils nur einer für ein Steuergerät 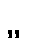 paßt".

Allerdings ist die Anwendung des aus dem Zeitschriftenartikel bekannten Zugangskontrollsystem insoweit von Bedeutung, als dort ebenfalls eine Reihe von Bildinformationen aus einem Fingerabdruck gewonnen werden. Angewandt auf die erfindungsgemäße Diebstahlschutzvorrichtung bedeutet dies, daß für die Steuergeräte jeweils eine dieser Bildinformationen maßgeblich ist. Sofern diese Bildinformationen während eines gemeinsamen Aufnahmevorgangs gewonnen werden, können sie im Rahmen der Erfindung auch dazu dienen, die verschiedenen Prüfinformationen (= Bildinformationen) in einer gemeinsamen Eingabeprozedur aufzunehmen.

Im Prinzip ist es möglich, jedes der Steuergeräte dann freizuschalten, wenn dieses die erwartete Prüfinformation erhält. Damit ist es aber möglich, das Kraftfahrzeug bereits dann in Betrieb zu nehmen, wenn nur die für den Betrieb wesentlichen Steuergeräte arbeiten, während weniger wichtige Steuergeräte ausgeschaltet bleiben können. Demgegenüber ergibt sich eine deutliche Erhöhung der Sicherheit, wenn jedes der Steuergeräte bei Übereinstimmen der Prüf- und Referenzinformation ein Quittierungssignal abgibt und wenn jedes Steuergerät nur bei Vorliegen der Quittierungssignale der anderen Steuergeräten freischaltbar ist. Es wird damit unmöglich, durch Manipulation eines Steuergeräts beispielsweise für das Antriebsaggregat zu versuchen, dieses zu aktivieren, da die Inbetriebnahme dieses Steuergeräts vom Vorliegen der Quittierungssignale der anderen Steuergeräte abhängig ist.

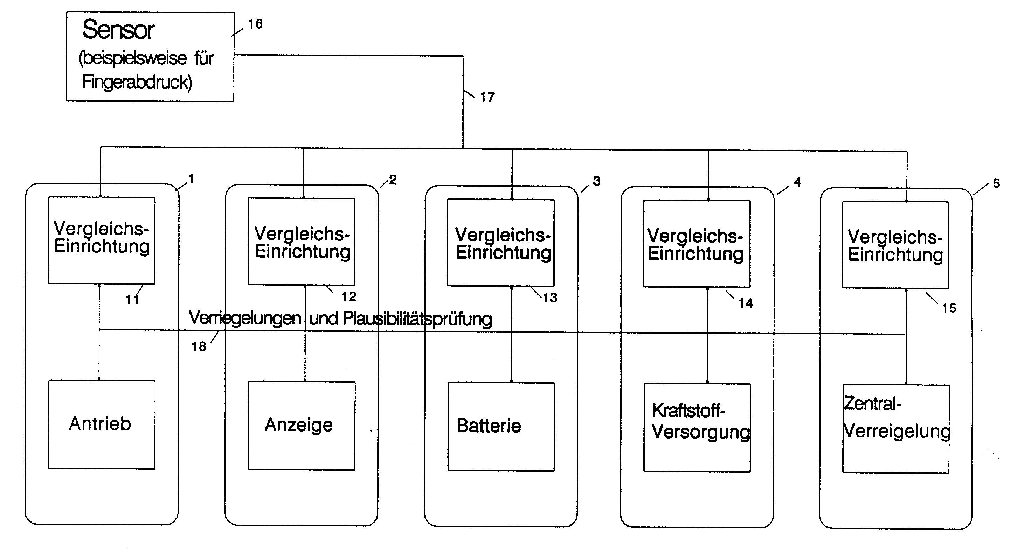

In der Zeichnung ist ein Ausführungsbeispiel der Erfindung dargestellt.

Die einzige Figur zeigt den grundsätzlichen Aufbau einer erfindungsgemäßen Diebstahlsicherungsvorrichtung für Kraftfahrzeuge. Die Steuergeräte 1 bis 5 für -nicht dargestellt- ein Antriebsaggregat, eine Anzeigeeinheit, eine Energieversorgungseinheit, eine Kraftstoffversorgungseinrichtung sowie eine Zentralverriegelungsvorrichtung sind mit Vergleichseinheiten 11 bis 15 zu einer Baueinheit integriert.

Jede der Vergleichseinheiten führt einen Bildvergleich zwischen einem gespeicherten Referenzbild und einem Bild durch, das durch eine Bildeingabeeinheit 16 erzeugt wird. Bei der Einheit 16 handelt es sich um eine Bildaufnahmeeinheit für den Fingerabdruck des berechtigten Benutzers, die unterschiedliche Bildinformationen erzeugt. Beispielsweise wird während eines Aufnahmevorgangs durch die Einheit 16 der Fingerabdruck mit einer Weißlichtbelichtung, durch Zwischenschaltung eines Graufilters oder durch eine weitere optische oder elektronische Manipulation individualisiert und die auf diese Weise erzeugten, hier fünf unterschiedlichen Bildinformationen während eines Einlesevorgangs über eine Eingangsleitung 17 jeder der Vergleichseinrichtungen 11 bis 15 zugeführt. Dort werden die eingehenden Bilder mit einem dort gespeicherten Referenzbild verglichen. Diese Referenzbilder wurden während eines vorbereitenden Initialisierungsvorgangs in die Vergleicher 15 eingegeben.

Stellen die Vergleicher eine Übereinstimmung des gespeicherten Referenzbilds mit einem der eingehenden Bilder des Fingerabdrucks fest, so erzeugen sie ein Quittierungssignal, das über einen gemeinsamen Datenbus 18 an die anderen Steuergeräte weitergegeben wird.

In den Steuergeräten befindet sich zusätzlich, beispielsweise als Teil der Vergleichseinrichtungen 11 - 15 ein Speicher für die von den anderen Steuergeräten erwarteten Quittierungssignale, die sich selbstverständlich voneinander unterscheiden. Liegen in dem jeweiligen Steuergerät die Quittierungssignale der anderen Steuergeräte vor und stimmt eines der eingehenden Bilder des Fingerabdrucks mit dem gespeicherten Referenzbild überein, so wird durch den Vergleicher ein Freigabesignal an das zugehörige Steuergerät geliefert. Auf diese Weise ist es möglich, bei höchstmöglicher Sicherheit eine Diebstahlschutzvorrichtung für Kraftfahrzeuge zu schaffen, die einen höchstmöglichen Manipulationsschutz bietet.

## Patentansprüche

1. Betriebsverfahren für eine Diebstahlschutzvorrichtung für Fahrzeuge, mit mehreren Steuergeräten für Fahrzeugkomponenten, die bei Übereinstimmen einer vorgegebenen Prüfinformation mit einer vorgegebenen Referenzinformation freigeschaltet werden und bei der für mindestens zwei Steuergeräte die Prüf- und die Referenzinformationen sich voneinander unterscheiden, dadurch gekennzeichnet, daß die Steuergeräte selbst den Vergleich mit den eingegebenen Prüfinformationen durchführen und bei erfolgreichem Vergleich ein individuelles Quittierungssignal an die anderen Steuergeräte ausgeben und daß die Prüf- und die Referenzinformationen unterschiedliche Bildinformationen sind, die aus einem Fingerabdruck ein und desselben Benutzers gewonnen werden.

## Claims

1. A method of operating an anti-theft device for motor vehicles, using a number of devices which control components of the vehicle and are unblocked if a given test information item coincides with a given reference item and wherein the test and the reference items are different for at least two control devices, **characterised in that** the control devices themselves compare the input test information items and, in the event of a successful comparison, deliver an individual acknowledgement signal to the other control devices, and in that the test and the reference information items are separate picture items obtained from a single user's fingerprint.

## Revendications

1. Procédé de mise en oeuvre d'un dispositif antivol pour véhicule comprenant plusieurs appareils de commande pour les composants du véhicule et qui en cas de concordance d'une information de contrôle prédéterminée, sont libérés par une information de référence prédéterminée, et pour laquelle au moins deux appareils de commande distinguent entre elles les références de contrôle et d'informations,
caractérisé en ce que
les appareils de commande effectuent même la comparaison avec les informations de contrôle introduites et en cas de comparaison réussie, un signal d'acquittement individuel est émis par l'autre appareil de commande et les informations de contrôle et de référence sont des informations d'image différentes obtenues par une empreinte de doigt et une seule de l'utilisateur.
